# EUROPEAN PATENT APPLICATION

(11) **EP 2 056 633 A2**
(43) Date of publication of application: **06.05.2009**
(21) Application number: 08018899.8
(22) Date of filing: 29.10.2008
(51) Int. Cl.: H04W 24/02

(54) **Method and apparatus for updating network information using mobile terminal**

(30) Priority: 29.10.2007 KR 20070108949
(71) Applicant: Postech Academy-Industry Foundation, Pohang-shi Kyungsangbuk-do (KR)
(72) Inventor: Suh, Young Joo, Pohang-shi Kyungsangbuk-do (KR); Kim, Deok Jin, Pohang-shi Kyungsangbuk-do (KR); Lim, Wan Seon, Pohang-shi Kyungsangbuk-do (KR); Kim, Dong Wook, Pohang-shi Kyungsangbuk-do (KR)
(74) Representative: Samson & Partner

(57) **Abstract**

An apparatus for updating network information in wireless networks includes a control module for, when a media independent handover (MIH) mobile terminal connects to an access network in the wireless networks, judging whether the access network is managed by a media independent handover information service (MIIS) server. The apparatus further includes a collection module for collecting network information on the access network if the access network is not managed by the MIIS server, and a communication module for sending the collected network information to the MIIS server to update network information being managed by the MIIS server.

## Description

The present invention relates to a method and an apparatus for updating information on networks, and more particularly, to a method and an apparatus for updating information on network within an MIH information service (MIIS) server using network information collected by the mobile terminal.

The IEEE 802.21 media independent handover (MIH) standard has been proposed for efficient mobility management of mobile terminals in the environment that a variety of wireless networks coexist. This IEEE 802.21 standard provides an MIH event service that notifies a user of link status, an MIH command service for managing interfaces of the mobile terminal, an MIH information service (MIIS) that notifies the status of neighbor networks, and so on.

A mobile terminal based on MIH standard has two or more network interfaces which allow the terminal to connect to different kinds of points of attachment (PoA) at the same time, wherein the PoA denotes an access point (AP) of level of Layer 2. There are points of service (PoS) entities for respective networks in the higher layer of PoA. The PoS links with the mobile terminal to offer an MIH event and an MIH command service.

Meanwhile, an MIH information service (MIIS) server, which is an external server for offering the MIH information service, serves to store status information about a variety of networks and provide the status information upon receipt of the mobile terminal's request. This MIIS is used when the mobile terminal needs the status information about its neighbor networks. According to IEEE 802.21 standard, two ways are defined, which acquire necessary status information from a database of the terminal itself or an external MIIS server. In view of implementations, it will be more advantageous to use the MIIS server. The IEEE 802.21 standard fully defines the procedure of sending and receiving information between a terminal and an MIIS server or about what information will be managed by the MIIS server. Here, a user of the mobile terminal is an entity that actually uses the MIH service, and a media independent handover function (MIHF) denotes an interface for offering the MIH service to the mobile terminal.

To be more specific, the mobile terminal notifies, through a "MIH_Get_information REQUEST" message, the MIIS server that the mobile terminal itself needs what information, and the MIIS server that receives such notification provides the information as requested to the mobile terminal through an "MIH_Get_information RESPONSE" message. In order to provide the information required by the mobile terminal, the MIIS server should first acquire information about networks in advance for storage in its own database. The IEEE 802.21 standard, however, states no scheme for acquiring such information by the MIIS server.

There are two methods to acquire the information through the MIIS server known in the art. A first method is to collect all information on networks by a manager and store the collected information directly to the MIIS server, and a second method is to update the information by inputting only IP addresses to be managed. However, the first method is known to be the most intuitive technique, but has a drawback in that it is difficult for the manager to acquire information about different kinds of networks. In other words, in the 3G (third generation) mobile communication network, WiMAX (Worldwide Interoperability for Microwave Access), WiBro (Wireless Broadband), and the like that are the commercial ones, since those network equipments are installed intentionally by service providers, it is relatively easy to acquire information on networks. For wireless LANs (Local Area Networks) randomly installed by users, however, it is not easy to do so.

The second method is a method that updates information by communication between an MIIS server and a network entity to be managed by the MIIS server by means of providing only an IP address of the network entity to the MIIS server. In this case, although the manager does not know all information on networks, the collection of the information is possible if he or she knows the IP address only. Even when information is revised, the manager can also update it through IP communication once again.

The second method requires that the network entity to be managed supports the MIH function, but many network equipments have been already installed without having a capability of supporting such function. Accordingly, they cannot realistically support the MIH function and are not also accessible if the IP address is not known.

It is, therefore, a primary object of the present invention to provide an apparatus and method, which can update network information within an MIIS server based on a terminal, without additionally modifying network equipments that have been already installed.

In accordance with an aspect of the present invention, there is provided an apparatus for updating network information in wireless networks, comprising:
a control module for, when a media independent handover (MIH) mobile terminal connects to an access network in the wireless networks, judging whether the access network is managed by a media independent handover information service (MIIS) server;
a collection module for collecting network information on the access network if the access network is not managed by the MIIS server; and
a communication module for sending the collected network information to the MIIS server to update network information being managed by the MIIS server.

In accordance with an aspect of the present invention, there is provided a method for updating network information in wireless networks, comprising:
when a media independent handover (MIH) mobile terminal connects to an access network in wireless networks, judging whether the access network is managed by a MIH information service (MIIS) server;
collecting network information on the access network if the access network is judged to be not managed by the MIIS server; and
sending the collected network information to the MIIS server to update network information being managed by the MIIS server.

The above and other objects and features of the present invention will become apparent from the following description of preferred embodiments, given in conjunction with the accompanying drawings, in which:
Fig. 1 shows a MIH based wireless communication network to which the present invention is applied;
Fig. 2 illustrates a block diagram of an apparatus for updating network information using an MIH mobile terminal in accordance with an embodiment of the present invention; and
Fig. 3 presents a flowchart for explaining a procedure in which an MIH mobile terminal updates network information within an MIIS server in accordance with an embodiment of the present invention.

Hereinafter, preferred embodiments of the present invention will be described in detail with reference to the accompanying drawings.

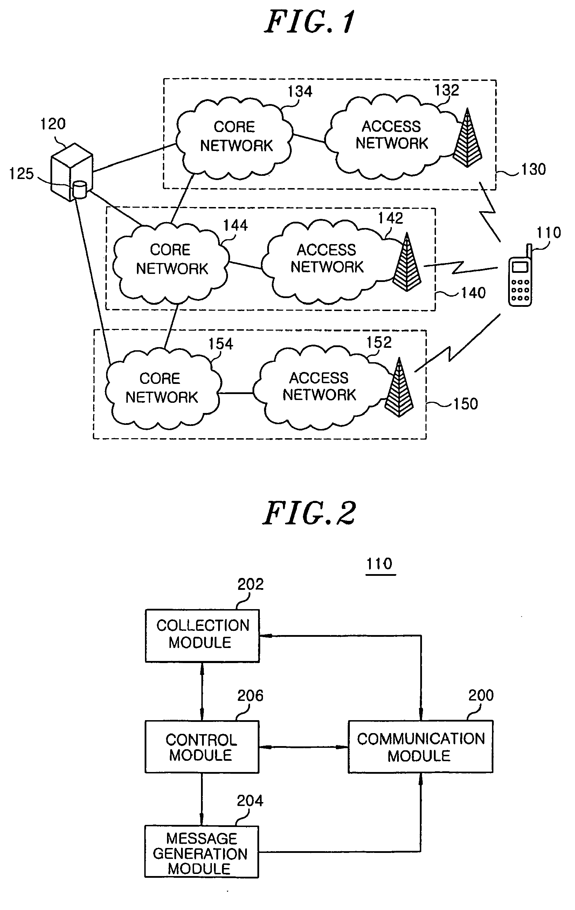

Fig. 1 shows the structure of an MIH based wireless communication network to which the present invention is applied.

The MIH based wireless network shown in Fig. 1 includes an MIIS server 120, plural networks 130, 140 and 150 for providing different wireless services, and an MIH mobile terminal 110 that has access to two or more networks and requests information about its neighbor networks. The MIIS server 120 manages information about the plural networks 130, 140 and 150 and provides requested information to the MIH mobile terminal 110 upon receipt of a request therefrom. The plurality networks 130, 140 and 150, for example, may include an IEEE 802.11 based WLAN, an IEEE 802.16 based WiMAX network, and a 3^{rd} generation partnership project (3GPP) based universal mobile telecommunications system (UMTS) network, each having an access network 132, 142 and 152 and a core network with PoS 134, 144, 154, respectively. Further, the access networks 132, 142, 152 may includes a WLAN PoA, a mobile WiMAX PoA and an UMTS PoA, respectively.

The mobile terminal 110 may be a wireless telephone, a cellular telephone, a personal digital assistant, a personal computer, or any other device that is capable of sending and receiving communication signals on the wireless networks, all of which have a multi-mode capability that has an interface for supporting two or more wireless technologies used for communication in the wireless networks.

Fig. 2 illustrates a block diagram of an apparatus for updating network information using an MIH mobile terminal 110 in accordance with an embodiment of the present invention.

Referring to Fig. 2, the network information updating apparatus, which may be incorporated in the MIH terminal 110, includes a communication module 200 for performing communication with the MIIS server 120, a collection module 202 for collecting information on any network to which the MIH mobile terminal 110 is connected, a message generation module 204 for generating a message to update a database 125 of the MIIS server 120, and a control module 206 for executing the entire control for updating the network information of the MIIS server 120. Although not shown in the drawing, the MIH mobile terminal 110 and the MIIS server 120 may include a local and remote MIHF for providing a handover function.

The communication module 200 communicates with the network to which the MIH mobile terminal 110 is connected or communicates with the MIIS server 120 over the access network to which the MIH mobile terminal is connected.

The collection module 202 collects the network information of the access network to which the MIH mobile terminal 110 is connected, and provides the network information to the control module 206. Examples of the network information collected by the collection module 202 may include the type of the access network, a network identifier or extended service set ID (ESSID), a network service fee, a link layer address of PoA, a location of PoA, a maximum data rate of PoA, a channel width of PoA, etc., as shown in TABLE 1 below.

**[TABLE 1]**

| Name | Contents |
|---|---|
| TYPE_IE_NETWORK_TYPE | Type of access network (WLAN, UMTS, Ethernet) |
| TYPE_IE_ACCESS_NETWORK_IDENTIFIER | Identifier of access network (ESSID for IEEE 802.11) |
| TYPE_IE_COST | Service fee of access network |
| TYPE_IE_POA_ADDRESS | Link layer address of PoA |
| TYPE_IE_POA_LOCATION | Location of PoA |
| TYPE_IE_POA_DATA_RATE | Maximum data rate of PoA |
| TYPE_IE_POA_CHANNEL_RANGE | Channel range of PoA |
| TYPE_IE_POA_CONFIG_METHOD | IP configuration method |
| TYPE_IE_POA_CAPABILITIES | Whether or not to support security, QoS, and Internet access |
| TYPE_IE_POA_IP_ADDRESS | IP address of PoA |

The message generation module 204, under the control of the control module 206, generates an update request message, e.g., "MIH_Update_Information REQUEST", for updating network information stored in the database 125 of the MIIS server 120, and sends the same to the MIIS server 120 via the communication module 200. In response to this message, the MIIS server 120 updates the network information stored in the database 125, and then sends a response message thereto, e.g., "MIH_Update_Information RESPONSE", to the terminal 110.

In addition, the message generation module 204 generates, when the MIH mobile terminal 110 connects to any network of the plurality of networks 130, 140 and 150, an information request message "MIH_Get_Information REQUEST", for acquiring information on the access network to which the MIH mobile terminal 110 is connected, and sends the message to the MIIS server 120. As a result, the MIH mobile terminal 110 receives a response message "MIH_Get Information RESPONSE" from the MIIS server 120.

The control module 206 sends the information request message to the MIIS server 120 by driving the message generation module 204 when the MIH mobile terminal 110 connects to an access network for the first time or connects to a new access network by way of a handoff, and receives the response message to the information request message through the communication module 200.

Based on the response message, the control module 206 can judge whether the access network to which the MIH mobile terminal is connected is under the management of the MIIS server 120. If the access network is not under the management of the MIIS server 120, the control module 206 collects network information on the access network, i.e., the information shown in Table 1 above, from the collection module 202. And then, the control module 206 provides the collected network information to the message generation module 204 to make a request for generating the update request message. In other words, the message generation module 204 generates the update request message on the basis of the network information provided from the control module 206, and transfers the same to the MIIS server 120 via the communication module 200.

Additionally, when there is a change in ESSID or identifier of the access network to which the MIH mobile terminal is connected out of the network information on the access network, the control module 206 judges that there is any change in the network information. Based on the judgment result, the control module 206 provides the change information to the message generation module 204 to make a request for generating an update request message. Accordingly, the message generation module 204 generates the update request message containing the change information and transfers it to the MIIS server 120 via the communication module 200.

Meanwhile, when the MIH mobile terminal 110 connects to the access network being managed by the MIIS server 120, the control module 206 receives network information on the access network from the MIIS server 120. By comparison between the received network information and network information collected by the collection module 202 at predetermined time intervals, the control module 206 judges whether there is any change in the network information on the access network, and updates the network information stored in the database 125 of the MIIS server 120 depending on the judgment result.

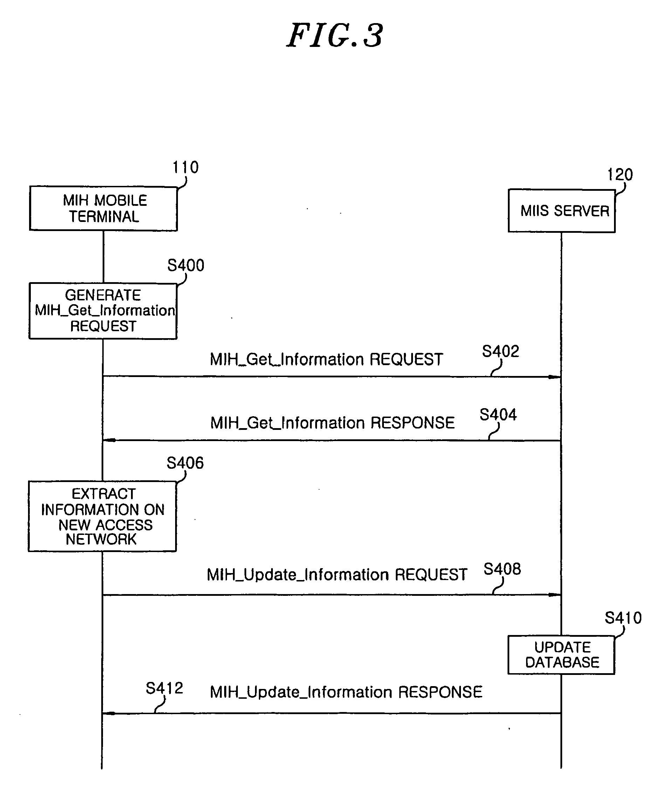

The following is a detailed description for a procedure of updating the network information being managed by the MIIS server, with reference to Fig. 3.

Fig. 3 illustrates a flowchart for explaining a procedure in which an MIH mobile terminal updates network information within an MIIS server in accordance with an embodiment of the present invention.

The following description is made under the premise that a first access network, e.g., an access network 132 to which the MIH mobile terminal 110 is connected at present is managed by the MIIS server 120, while a second network, e.g., an access network 142 or 152 to which the MIH mobile terminal 110 is connected after being handed-over is not managed by the MIIS server 120.

As shown in Fig. 3, when the MIH mobile terminal 110 connects to the access network 132, in order to obtain network information on the access network 132 through the MIIS server 120, the control module 206 generates an information request message "MIH_Get_Information REQUEST" by the message generation module 204 at step S400 and sends it to the MIIS server 120 via the communication module 200 at step S402.

In response to this message, the MIIS server 120 extracts the network information on the access network 132 by searching its own database 125, and generates a response message "MIH_Get_Information RESPONSE" based on the extracted information for its transmission to the MIH mobile terminal 110 at step S404. Accordingly, the control module 206 of the MIH mobile terminal 110 acquires network information on the access network 132 by receiving "MIH_Get_Information RESPONSE" through the communication module 200. If, however, the MIIS server 120 does not have the network information on the access network 132, the MIIS server 120 sends a response message "MIH_Get_Information RESPONSE" indicating that the MIIS server 120 does not have the network information on the access network 132 to the MIH mobile terminal 110.

Thereafter, when the MIH mobile terminal 110 has been handed-over to a new access network 142 or 152 from the access network 132, the MIH mobile terminal 110 and the MIIS server 120 repeatedly perform steps S402 and S404 as described above. At this time, after the MIH mobile terminal 110 sends the information request message to the MIIS server 120, the MIH mobile terminal 110 receives a response message indicating that there is no information on the access network 142 or 152 from the MIIS server 120, i.e., a response message "MIH_Get_Information RESPONSE" indicating that the MIIS server 120 does not manage the access network 142 or 152. In response, the control module 206 drives the collection module 202 for extracting information on the access network 142 or 152 to which the MIH mobile terminal 110 has been handed-over, so that the collection module 202 can collect the network information on the new access network 142 or 152 at step S406 and delivers the collected network information to the message generation module 204. In response, the message generation module 204 generates an update request message "MIH_Update_Information REQUEST" containing the network information on the access network 142 or 152 and then sends it to the MIIS server 120 via the communication module 200 at step S408.

In response to this update request message, the MIIS server 120 updates the database 125 at step S410, and then generates a response message "MIH_Update_Information RESPONSE" and transfers the response message to the MIH mobile terminal 110 at step S412.

The update request message and its corresponding response message are conveyed through a link established between the MIIS server 120 and the MIH mobile terminal 110 for transmission and reception of the information request message and the response message.

Meanwhile, while the present invention has been described with respect to the particular embodiment that allows the MIH mobile terminal 110 to collect network information and update the database 125 in the MIIS server 120 by its connection to the other access network that is not managed by the MIIS server 120, it is also possible to update network information stored in the database 125 of the MIIS server 120, by making sure that the MIH mobile terminal 110 generates an update request message and sends it to MIIS server 120, when a network manager sets a new ESSID or network identifier, that is, even when the MAC address remains unchanged but ESSID is changed out of the network information collected by the collection module 202.

In other words, when the MIH mobile terminal 110 connects to the first network, it receives the information on the first network from the MIIS server 120. Next, the MIH mobile terminal 110 compares the received network information with network information collected at predetermined time intervals to judge whether there is any change in the network information on the first network to which the MIH mobile terminal is connected. Based on the judgment result, the MIH mobile terminal 110 then updates the information stored in the database 125 of the MIIS server 120. As described above, the present invention can update a database in an MIIS server by using network information collected by a MIH mobile terminal if an access network to which the MIH mobile terminal is connected is not managed by the MIIS server. Therefore, it is possible to readily acquire information even on networks, which cannot be readily found by the network manager or make it difficult for the network manager to acquire network information, without additionally modifying network equipments, by updating a database in an MIIS server based on the network information collected by the MIH mobile terminal.

Furthermore, since an MIIS server can recognize any network to which a MIH mobile terminal connects at least one time, the present invention enables other networks to use updated information later.

While the invention has been shown and described with respect to the preferred embodiments, it will be understood by those skilled in the art that various changes and modification may be made without departing from the scope of the invention as defined in the following claims.

## Claims

1. An apparatus for updating network information in wireless networks, comprising:
a control module for, when a media independent handover (MIH) mobile terminal connects to an access network in the wireless networks, judging whether the access network is managed by a media independent handover information service (MIIS) server;
a collection module for collecting network information on the access network if the access network is not managed by the MIIS server; and
a communication module for sending the collected network information to the MIIS server to update network information being managed by the MIIS server.

2. The apparatus of claim 1, wherein the control module performs, if the access network is managed by the MIIS server, comparing the network information on the access network from the MIIS server with the collected network information from the access network to check whether there is a change in the network information on the access network, and sending the change information to the MIIS server if there is a change in the network information on the access network.

3. A method for updating network information in wireless networks, comprising:
when a media independent handover (MIH) mobile terminal connects to an access network in wireless networks, judging whether the access network is managed by a MIH information service (MIIS) server;
collecting network information on the access network if the access network is judged to be not managed by the MIIS server; and
sending the collected network information to the MIIS server to update network information being managed by the MIIS server.

4. The method of claim 3, wherein sending the collected network information to the MIIS server comprises sending an update request message having the collected network information to the MIIS server to update the network information being managed by the MIIS server.

5. The method of claim 3, further comprising receiving network information on the access network through communication with the MIIS server if the access network is judged to be managed by the MIIS server.

6. The method of claim 5, further comprising:
comparing the network information on the access network being managed by the MIIS server with the collected network information on the access network; and
if there is a change in the network information on the access network managed by the MIIS server based on the comparison result, sending the change information to the MIIS server to update the network information on the access network being managed by the MIIS server.

7. The method of claim 6, wherein sending the change information to the MIIS server comprises sending an update request message having the change information to the MIIS server to update the network information being managed by the MIIS server.
